(19) **Europäisches Patentamt / European Patent Office / Office européen des brevets**

(11) **EP 2 400 643 B1**

(12) **FASCICULE DE BREVET EUROPEEN**

(45) Date de publication et mention
de la délivrance du brevet:
**13.03.2013 Bulletin 2013/11**

(51) Int Cl.:
***H02M 3/158*** (2006.01)

(21) Numéro de dépôt: **11305700.4**

(22) Date de dépôt: **07.06.2011**

(54) **Procédé de commande d'un convertisseur de tension continue-continue entrelaçant plusieurs phases à commutation par tension nulle**

Steuerungsverfahren eines mehrphasig verschachtelten nullspannungsschaltenden Gleichstrom/ Gleichstrom-Wandlers

Method of controlling a multiphase interleaving ZVS DC-DC converter

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2010 FR 1055094**

(43) Date de publication de la demande:
**28.12.2011 Bulletin 2011/52**

(73) Titulaire: **Valeo Systèmes de Contrôle Moteur 95800 Cergy Saint-Christophe (FR)**

(72) Inventeurs:
• **De Sousa, luis**
**95670 Eragny Sur Oise (FR)**
• **Sardat, Pierre**
**93340 Le Raincy (FR)**
• **Fontaine, Stéphane**
**92110 Clichy (FR)**

(56) Documents cités:
**WO-A1-2005/006526    US-B1- 6 628 106**

• **ABU-QAHOUQ J ET AL: "Multiphase Voltage-Mode Hysteretic Controlled DC-DC Converter With Novel Current Sharing", IEEE TRANSACTIONS ON POWER ELECTRONICS, IEEE SERVICE CENTER, PISCATAWAY, NJ, US, vol. 19, no. 6, 1 novembre 2004 (2004-11-01), pages 1397-1407, XP011121650, ISSN: 0885-8993, DOI: DOI:10.1109/TPEL.2004.836639**
• **PENGFEI LI ET AL: "A Delay-Locked Loop Synchronization Scheme for High-Frequency Multiphase Hysteretic DC-DC Converters", IEEE JOURNAL OF SOLID-STATE CIRCUITS, IEEE SERVICE CENTER, PISCATAWAY, NJ, US, vol. 44, no. 11, 1 novembre 2009 (2009-11-01), pages 3131-3145, XP011279285, ISSN: 0018-9200, DOI: DOI:10.1109/JSSC.2009.2033508**

**EP 2 400 643 B1**

**Description**

L'invention concerne le domaine de la conversion d'énergie et plus particulièrement les convertisseurs de tension continue-continue, bien connus de l'homme du métier sous leur dénomination anglaise « DC-DC » pour « Direct Current - Direct Current »; on parle donc classiquement de convertisseurs DC-DC. L'invention vise plus spécifiquement à limiter les pertes dans un convertisseur DC-DC comprenant une pluralité des cellules entrelacées, connu sous le nom de convertisseur multicellulaire entrelacé.

Un convertisseur de tension comprend de manière classique des cellules de puissance comportant chacune des interrupteurs qui sont commandés de manière à découper une tension d'entrée pour former une tension de sortie de valeur désirée.

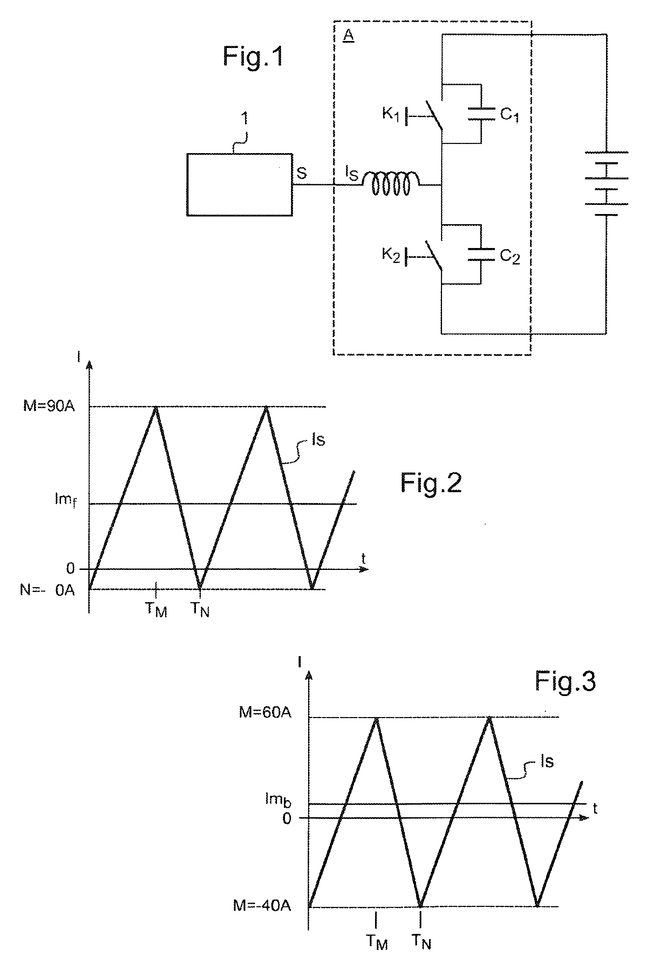

Pour limiter les pertes en commutation, il est connu d'utiliser un convertisseur qui comprend des cellules de puissance comportant des interrupteur à blocage commandé et amorçage spontané. En référence à la figure 1, une cellule de puissance A comporte deux interrupteurs K1, K2, montés en série, qui sont commandés de manière alternée par un dispositif de commande non représenté. Chaque interrupteur K1, K2 possède une capacité C1, C2 montée en parallèle de manière à retarder la montée de la tension et éviter les pertes en commutation des interrupteurs K1, K2. Chaque cellule de puissance A comporte en outre une inductance L dont une extrémité est montée entre les deux interrupteurs K1, K2 comme représenté sur la figure 1. L'autre extrémité de l'inductance, référencée S sur la figure 1, constitue la sortie de la cellule A et est reliée à une charge 1 qui est alimentée par l'intensité de sortie Is de la cellule de puissance A dont la valeur dépend de la commutation des interrupteurs K1, K2.

Pour limiter les pertes en commutation, chaque cellule commute au zéro de tension, dit ZVS pour « Zero Voltage Switching », avec un seuil de Courant Minimal de Décharge de la Capacité, dit seuil de commutation CMDC, qui doit être dépassé pour permettre une commutation en ZVS. Une telle cellule de puissance commandée en ZVS avec son seuil de commutation CMDC est connue de l'homme du métier.

Afin d'obtenir une tension de sortie de valeur désirée pour une commutation en zéro de tension ZVS, il est connu de faire onduler fortement le courant dans la bobine L de la cellule de puissance A entre un seuil supérieur M et un seuil inférieur N, la cellule commutant lorsque l'intensité du courant atteint un des seuils N, M aux instants Tn, Tm comme représenté sur les figures 2 à 4.

Comme représenté sur la figure 2, à forte charge, le courant de sortie Is dans l'inductance L ondule fortement. Sa valeur moyenne $Im_f$, de l'ordre de 40A-50A, correspond à l'intensité qui est consommée par la charge 1, la pente de l'ondulation dépendant de la valeur de l'inductance L.

Les pertes électriques dans la cellule A sont fonction de l'ondulation du courant Is. A forte charge, les pertes électriques sont relativement importantes mais sont généralement négligées par rapport à la puissance utile fournie à ladite charge 1.

A faible charge, comme représenté sur la figure 3, les valeurs des seuils sont modifiées pour obtenir une intensité moyenne à faible charge $Im_b$ de l'ordre de 1-10A. La courbe de courant de sortie Is dans l'inductance L est translatée vers le bas, la valeur moyenne $Im_b$ correspondant à l'intensité consommée par la charge 1. A faible charge, le courant de sortie consommé est peu élevé mais les pertes électriques liées aux ondulations du courant de sortie Is demeurent constantes. Le rendement énergétique est faible.

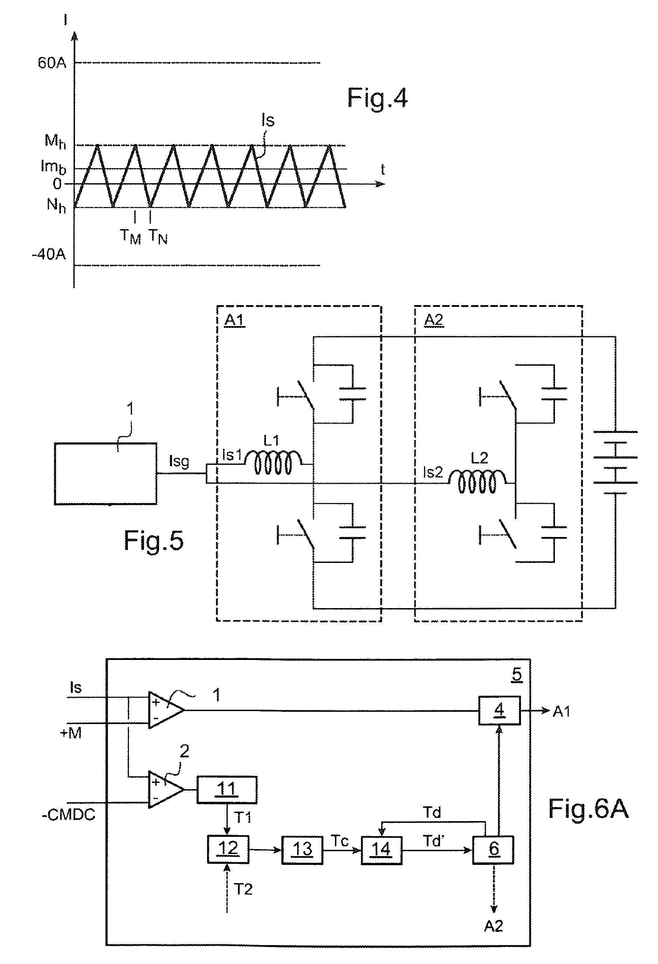

Pour éliminer cet inconvénient, il est connu d'augmenter la fréquence de commutation de la cellule de manière à limiter l'amplitude des ondulations comme représenté sur la figure 4. Pour augmenter la fréquence de commutation, on connaît un dispositif de commande de commutation basé sur le principe de l'hystérésis qui permet de paramétrer l'écart entre les seuils supérieur M et inférieur N en fonction de la valeur de la charge 1, c'est-à-dire de la valeur du courant de sortie Is consommé par la charge 1. Autrement dit, plus la valeur de la charge est importante, plus l'écart entre le seuil supérieur M et le seuil inférieur N est important.

A faible charge, en référence à la figure 4, la valeur de seuil inférieure N et la valeur seuil supérieure M sont proches conformément au principe de l'hystérésis. Le courant de sortie Is ondule avec une amplitude plus faible mais à une fréquence plus élevée, la valeur de la pente de l'ondulation étant constante du fait qu'elle dépend directement de la valeur de l'inductance L. L'amplitude des ondulations étant plus faible, les pertes électriques sont moindres. Un tel fonctionnement est satisfaisant pour un convertisseur de tension mono cellulaire.

Pour obtenir un courant de sortie sensiblement continu dans la charge 1, on connaît un convertisseur de tension multicellulaire entrelacé comprenant une pluralité des cellules de puissance qui fournissent chacune un courant de sortie sinusoïdal qui est déphasé par rapport aux autres courants des cellules. Ainsi, la somme des courants des cellules forme un courant global « lissé », quasi-continu, ce qui améliore la durée de vie de la charge qui reçoit un tel courant de sortie.

Pour limiter les pertes électriques à faible charge pour un convertisseur multicellulaire, une solution immédiate serait de modifier la fréquence de commutation à la manière d'un convertisseur monocellulaire selon le principe de l'hystérésis. Cependant, cela présente des inconvénients liés à la dispersion des valeurs des inductances L des cellules A. En effet, comme la pente de la courbe d'intensité de courant dépend de l'inductance L, les fréquences de commutation des cellules sont différentes.

Il en résulte que les courants de sortie Is des cellules qui sont initialement déphasés, d'une même durée de déphasage pour former un courant global lissé, se déphasent les uns par rapport aux autres au fil du temps. Dans les cas les plus critiques, les courants de sortie des cellules peuvent osciller en phase. Ainsi, contrairement au but recherché, un dispositif de commande reposant sur le principe de l'hystérésis induit de fortes ondulations dans le courant de sortie global d'un convertisseur multicellulaire entrelacé.

En outre, à faible charge, la fréquence de commutation des cellules augmente du fait de l'hystérésis, ce qui accroît la probabilité d'oscillations en phase des courants de sortie des cellules. Le courant de sortie global obtenu présente alors des oscillations de fortes amplitudes ce qui induit des pertes électriques importantes. Une augmentation de fréquence selon le principe de l'hystérésis pour un convertisseur multicellulaire entrelacé ne permet pas de limiter les pertes électriques, bien au contraire.

Le brevet US 6628106 divulgue un procédé d'asservissement d'un convertisseur de tension DC/DC fonctionnant en ZVS.

Pour éliminer au moins certains de ces inconvénients, l'invention concerne un procédé d'asservissement d'un convertisseur de tension continue-continue fonctionnant en commutation au zéro de tension avec un seuil de commutation, le convertisseur comprenant :

- une pluralité de cellules entrelacées, chaque cellule comprenant au moins deux interrupteurs commandés, agencés pour être alternativement fermés et ouverts, et une inductance dans laquelle circule un courant de sortie de la cellule,
- le convertisseur comprenant en outre une horloge de période de commutation déterminée agencée pour commander les interrupteurs en commutation entre des seuils de commande supérieur et inférieur,
- le seuil de commande, de valeur la plus proche du seuil de commutation, étant désigné seuil de commande associé,
  procédé dans lequel :
- on mesure, pour chaque cellule, une durée de dépassement s'écoulant entre l'instant où l'intensité de courant de sortie de la cellule est égal au seuil de commande associé et l'instant où l'intensité de courant de sortie de la cellule est égal au seuil de commutation ;
- on détermine une durée de correction correspondant à la durée minimale de dépassement mesurée pour la pluralité de cellules pendant un cycle d'entrelacement, un cycle d'entrelacement correspondant à la durée pendant laquelle une durée de dépassement est mesurée pour la pluralité de cellules ;
- on calcule une période de commutation optimisée de l'horloge en soustrayant à la période de commutation déterminée une durée d'anticipation qui est fonction de la durée de correction ; et
- on applique la période de commutation optimisée à l'horloge de manière à asservir l'entrelacement des courants de sortie des cellules du convertisseur.

L'invention est née d'un souci de limitation des pertes électriques pour un convertisseur multicellulaire entrelacé à faible charge. Néanmoins, le procédé selon l'invention permet de limiter le déphasage de l'entrelacement des cellules dans un convertisseur, aussi bien à faible charge qu'à forte charge.

Grâce au procédé selon l'invention, on asservit la fréquence de commutation de l'horloge en fonction des durées de dépassement mesurées. Ainsi, le déphasage entre les cellules du convertisseur demeure constant au fil du temps. L'asservissement des courants de sortie permet de garantir un courant lissé en sortie du convertisseur multicellulaire entrelacé aussi bien à forte charge qu'à faible charge. En outre, les commutations des cellules du convertisseur surviennent toujours dans la plage de commutation ce qui garantit peu de pertes en commutation.

Selon un premier aspect, la durée d'anticipation est égale à la durée de correction. La modification de la période de commutation de l'horloge permet d'annuler le temps de dépassement pour une cellule et de diminuer l'écart de déphasage des autres cellules pour obtenir des courants de sortie asservis.

Selon un autre aspect, un seuil de correction étant prédéterminé, la durée d'anticipation est égale à la durée de correction si la durée de correction est inférieure au seuil de correction. De préférence, la durée d'anticipation est égale au seuil de correction si la durée de correction est supérieure au seuil de correction. En limitant la valeur de la durée d'anticipation, on asservit les courants de sortie de proche en proche, la modification de la fréquence de commutation des cellules étant réalisée de manière graduée.

De préférence, on applique une période de commutation optimisée à l'horloge après un nombre de cycles d'entrelacement prédéterminé. L'asservissement est ainsi réalisé de manière périodique pour corriger un éventuel défaut d'entrelacement des courants de sortie au fil du temps.

De préférence encore, on applique une période de commutation optimisée à l'horloge à chaque cycle. Ainsi, les courants de sortie sont asservis en continu ce qui garantit un courant de sortie quasi-continu en sortie du convertisseur.

L'invention concerne également un dispositif d'asservissement, pour la mise en oeuvre du procédé présenté précédemment, d'un convertisseur de tension continue-continue comprenant une pluralité de cellules entrelacées, chaque cellule comprenant au moins deux interrupteurs commandés, agencés pour être alternativement fermés et ouverts, une inductance dans laquelle circule un courant de sortie de la cellule, le convertisseur comprenant en outre une horloge de période de commutation déterminée agencée pour commander les interrupteurs en commutation entre des seuils de commande supérieur et inférieur, le seuil de commande, de valeur la plus proche du seuil de commutation, étant désigné seuil de commande associé, dispositif comprenant :

- au moins un bloc de dépassement agencé pour mesurer, pour chaque cellule, une durée de dépassement s'écoulant entre l'instant où l'intensité de courant de sortie de la cellule est égal au seuil associé et l'instant où l'intensité de courant de sortie de la cellule est égal au seuil de commutation ;
- une mémoire de stockage pour enregistrer les durées de dépassement mesurées par le bloc de dépassement ;
- un bloc de correction agencé pour déterminer dans la mémoire de stockage une durée de correction correspondant à la durée minimale de dépassement mesurée pour la pluralité de cellules pendant un cycle d'entrelacement, un cycle d'entrelacement correspondant à la durée pendant laquelle une durée de dépassement est mesurée pour la pluralité de cellules ;
- un bloc d'optimisation agencé pour calculer une période de commutation optimisée de l'horloge en soustrayant à la période de commutation déterminée une durée d'anticipation qui est fonction de la durée de correction et pour appliquer la période de commutation optimisée à l'horloge de manière à asservir l'entrelacement des courants de sortie des cellules du convertisseur.

De préférence, le bloc d'optimisation comporte un module de régulation agencé pour réguler la valeur de la durée d'anticipation.

De préférence, le bloc d'optimisation comporte un module de limitation agencé pour borner la valeur de la durée de correction.

De préférence, le dispositif comporte un premier comparateur agencé pour comparer l'intensité de sortie d'une cellule à un seuil de commande prédéterminé, de manière à commander la commutation des interrupteurs pour ledit seuil de commande prédéterminé, l'horloge commandant la commutation des interrupteurs pour ledit autre seuil de commande.

De préférence, le dispositif comportant un deuxième comparateur agencé pour comparer l'intensité de sortie d'une cellule audit seuil de commutation, le bloc de dépassement est relié audit deuxième comparateur pour mesurer la durée de dépassement de ladite cellule.

De préférence, le dispositif comporte en outre un module de pilotage agencé pour commander le seuil de commutation du deuxième comparateur.

De préférence, le dispositif comporte en outre un module de pilotage agencé pour commander ledit seuil de commande prédéterminé du premier comparateur.

L'invention concerne également un convertisseur de tension continue-continue comprenant un dispositif d'asservissement présenté précédemment, un programme d'ordinateur pour l'exécution du procédé tel que présenté précédemment et un support d'enregistrement dans lequel est stocké ledit programme.

L'invention sera mieux comprise à l'aide du dessin annexé sur lequel :

- la figure 1 est une représentation schématique des composants d'une cellule d'un convertisseur DC-DC (déjà commentée) ;
- la figure 2 est une représentation du courant de sortie d'une cellule pour alimenter un équipement à forte charge (déjà commentée) ;
- la figure 3 est une représentation du courant de sortie d'une cellule pour alimenter un équipement à faible charge (déjà commentée) ;
- la figure 4 est une représentation du principe d'hystérésis pour une cellule alimentant un équipement à faible charge (déjà commentée) ;
- la figure 5 représente un convertisseur multicellulaire avec deux cellules entrelacées ;
- la figure 6A représente une première forme de réalisation d'un dispositif d'asservissement d'un convertisseur de tension selon l'invention, le dispositif d'asservissement comportant un bloc d'optimisation ;
- la figure 6B représente une forme de réalisation préférée du bloc d'optimisation du dispositif de la figure 6A ;
- la figure 7 est une représentation des courants de sortie de deux cellules entrelacées au cours de la mise en oeuvre du procédé d'asservissement de l'invention pendant deux cycles d'entrelacement avec un histogramme des durées de dépassement des cellules et un histogramme des instants des commutations inférieures des cellules ;
- la figure 8 représente une deuxième forme de réalisation d'un dispositif d'asservissement d'un convertisseur de tension selon l'invention avec un module de pilotage ; et
- la figure 9 est une représentation du courant de sortie d'une cellule en fonction des variations des paramètres d'entrée du module de pilotage du dispositif d'asservissement de la figure 8.

L'invention concerne un convertisseur de tension continue-continue multicellulaire entrelacé comprenant une pluralité de cellules de puissance qui sont entrelacées les unes avec les autres.

A titre d'exemple et en référence à la figure 5, un convertisseur multicellulaire selon l'invention comprend deux cellules A1, A2 et alimente une charge 1.

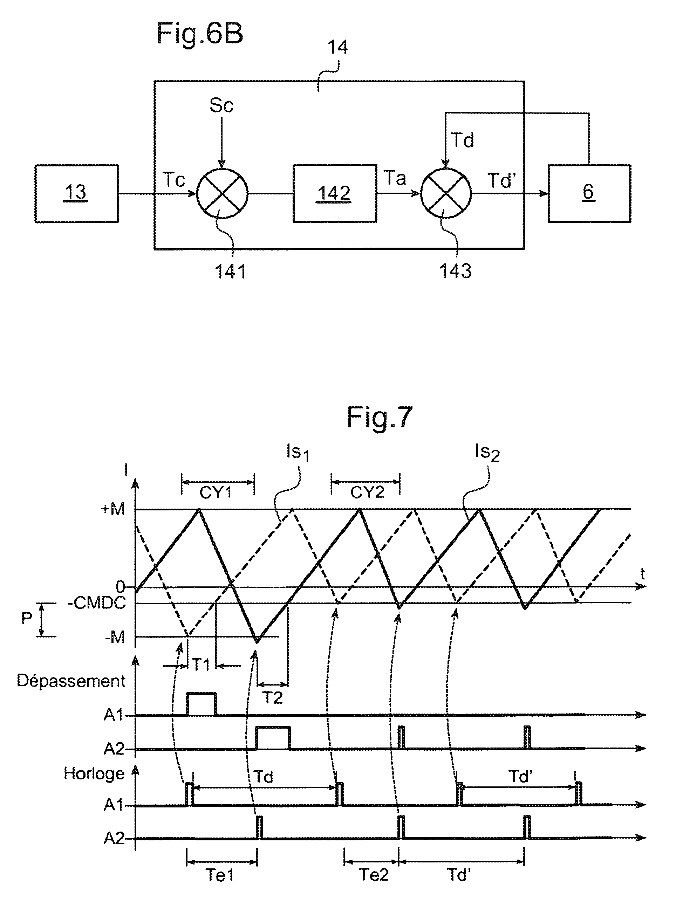

En référence à la figure 1, chaque cellule de puissance comporte deux interrupteurs K1, K2, montés en série l'un avec l'autre, qui sont commandés de manière alternée par un dispositif d'asservissement 5 représenté sur la figure 6. Chaque interrupteur K1, K2 possède une capacité C1, C2 montée en parallèle de manière à retarder la montée de la tension et éviter les pertes en commutation des interrupteurs K1, K2. Chaque cellule comporte en outre une inductance L1, L2 dont une extrémité est montée entre les deux interrupteurs comme représenté sur la figure 1. L'autre extrémité de l'inductance, référencée S sur la figure 1, constitue la sortie de la cellule et permet de mesurer l'intensité de sortie Is de la cellule résultant de la commutation des interrupteurs K1, K2.

Pour contrôler les ondulations des courant de sortie des cellules, le convertisseur de tension comporte un dispositif d'asservissement 5 agencé pour commander les interrupteurs K1, K2 de manière à ce que l'intensité de sortie Is de chacune des cellules oscille entre un seuil de commande supérieur et un seuil de commande inférieur.

A titre d'exemple, en référence aux figures 6A et 7, le dispositif d'asservissement 5 commande la commutation entre un seuil de commande supérieur, de valeur positive +M, et un seuil de commande inférieure, de valeur négative -M. +M et -M peuvent, comme dans le présent exemple, être différents en valeur absolue. A cet effet, le dispositif d'asservissement 5 comporte un premier comparateur 21, désigné par la suite comparateur supérieur 21, agencé pour comparer la valeur de l'intensité de sortie Is d'une cellule à la valeur du seuil de commande supérieur +M et agencé pour faire commuter les interrupteurs K1, K2 en cas de dépassement dudit seuil de commande supérieur +M. L'étape de commutation au niveau du seuil de commande supérieur d'une cellule est désignée « commutation supérieure » de la cellule. De manière similaire, l'étape de commutation au niveau du seuil de commande inférieur est désignée « commutation inférieure ».

Le dispositif d'asservissement 5 comporte une horloge de commande 6 agencée pour faire commuter les interrupteurs K1, K2 de la cellule à une période de commutation déterminée Td. Autrement dit, après un intervalle de temps déterminé Td suite à la commutation supérieure de la cellule, l'horloge 6 enclenche la commutation inférieure de la cellule.

En référence à la figure 6A, le dispositif d'asservissement 5 comporte en outre un commutateur 4 agencé pour enclencher une commutation supérieure sur ordre du comparateur supérieur 21 et une commutation inférieure sur ordre de l'horloge 6.

La commutation des interrupteurs K1, K2 est déterminée, d'une part, par le seuil de commande supérieur +M, et d'autre part, par la période de commutation Td de l'horloge 6 de manière à ce que la commutation soit réalisée lorsque le courant de sortie Is de la cellule est sensiblement égal au seuil de commande inférieur -M. Comme indiqué précédemment, en raison de la dispersion des valeurs des inductances L1, L2 des cellules, la commutation inférieure des interrupteurs K1, K2 est approximative. Cette approximation est corrigée par le procédé selon l'invention comme décrit par la suite.

Selon l'invention, chaque cellule A1, A2 fonctionne selon un mode ZVS et commute au zéro de tension afin de limiter les pertes en commutation. On définit un seuil de commutation Z qui doit être dépassé pour permettre une commutation en ZVS. Dans cet exemple, le seuil de commutation Z est un seuil de Courant Minimal de Décharge de la Capacité, dit seuil de commutation CMDC.

Les seuils de commande supérieur +M et inférieure -M sont paramétrés de manière à ce que le seuil de commutation CMDC soit compris entre les deux seuils de commande -M, +M pour permettre un fonctionnement en ZVS. Une telle cellule de puissance commandée en ZVS est connue de l'homme du métier.

Le seuil de commutation Z est qualifié de seuil de commutation inférieur lorsqu'il commande une commutation des interrupteurs pour faire croître le courant dans la cellule et de seuil de commutation supérieur lorsqu'il commande une commutation des interrupteurs pour faire décroître le courant dans la cellule. De manière classique, pour un convertisseur de tension continue-continue abaisseur de tension, un seuil de commutation inférieur de valeur négative, égale à -CMDC, est défini. Par contre, pour un convertisseur de tension continue-continue élévateur de tension, un seuil de commutation supérieur de valeur positive, égale à +CMDC, est défini.

A chaque type de seuil de commutation Z est associé un seuil de commande afin de former une plage de commutation P définie entre le seuil de commutation Z et son seuil de commande associé. Le seuil de commande, de valeur la plus proche du seuil de commutation Z, est désigné seuil de commutation associé.

A titre d'exemple, pour un convertisseur de tension continue-continue abaisseur de tension, le seuil de commutation Z est un seuil de commutation inférieure de valeur -CMDC et est associé au seuil de commande inférieure -M. La plage de commutation P est définie entre le seuil de commutation inférieur - CMDC et son seuil de commande inférieur -M comme représenté sur la figure 7. Lorsque la commutation survient dans la plage de commutation P, la commutation entraîne peu de pertes électriques conformément au fonctionnement ZVS.

En référence à la figure 5, le convertisseur multicellulaire comprend deux cellules A1, A2 dont les sorties sont reliées à une sortie commune fournissant une intensité de sortie globale $Is_g$ à la charge 1. L'intensité du courant de sortie global $Is_g$ du convertisseur correspond à la somme des courants de sortie $Is_1$, $Is_2$ des cellules $A_1$, $A_2$.

De manière connue, pour obtenir en sortie du convertisseur une intensité de sortie sensiblement constante, les courants de sortie des cellules sont déphasés. On parle alors de cellules entrelacées. Autrement dit, pour un convertisseur comprenant n cellules, les cellules sont déphasées d'une période d'entrelacement correspondant, de manière théorique, à la période de commutation prédéterminée Td de l'horloge 6, de manière à obtenir un courant de sortie global $Is_g$ faiblement ondulé désigné également « courant lissé ». Un tel courant est avantageux du fait qu'il permet de recharger une charge, telle qu'une batterie électrique, de manière simple et rapide sans diminuer sa durée de vie.

Le dispositif d'asservissement 5 selon l'invention est agencé pour conserver un déphasage fixe entre les courants de sortie Is$_1$, Is$_2$ de chacune des sorties des cellules A1, A2. Autrement dit, l'entrelacement des cellules A$_1$, A$_2$, est asservi. On parle également d'asservissement des courants de sortie Is$_1$, Is$_2$ des cellules A1, A2.

Le dispositif d'asservissement 5 selon l'invention comporte un deuxième comparateur 22, dit comparateur inférieur 22, agencé pour comparer la valeur du courant de sortie Is de chaque cellule au seuil de commutation inférieur -CMDC.

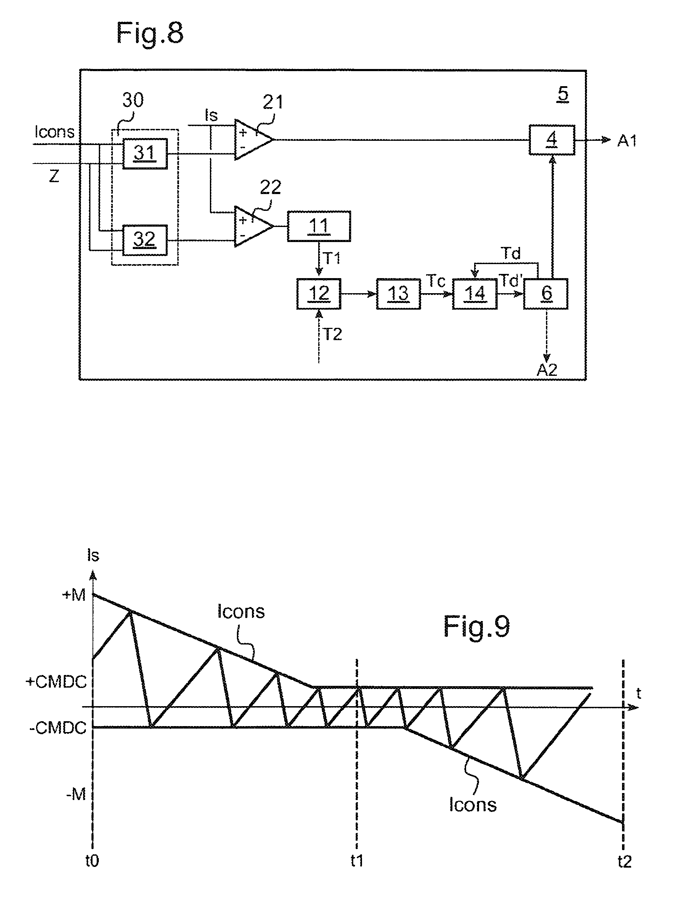

En référence à la figure 6A, le dispositif d'asservissement 5 comporte au moins un bloc de dépassement 11, relié au comparateur inférieur 22, agencé pour mesurer, pour une cellule de puissance A1, A2, une durée de dépassement T1, T2 s'écoulant entre l'instant où l'intensité de courant de sortie Is$_1$, Is$_2$, de la cellule est égal au seuil de commande associé -M de la plage de commutation P et l'instant où l'intensité de courant de sortie Is$_1$, Is$_2$ de la cellule est égal au seuil de commutation -CMDC. Dans cet exemple, le convertisseur de tension comprenant deux cellules entrelacées A1, A2, le dispositif d'asservissement 5 comporte deux blocs de dépassement 11. Par souci de clarté, un seul bloc de dépassement 11 est représenté sur les figures 6A et 8.

Le dispositif d'asservissement 5 comporte en outre une mémoire de stockage 12 dans laquelle sont stockées les durées de dépassement T1, T2 de chaque cellule de puissance A1, A2 mesurées par les blocs de dépassement 11.

Par la suite, on définit un cycle d'entrelacement comme la durée pendant laquelle une durée de dépassement T1, T2 est mesurée pour l'ensemble des cellules de puissance A1, A2. Dans cet exemple, pour un convertisseur comprenant deux cellules entrelacées, la mémoire de stockage 12 comporte deux durées de dépassement T1, T2 pour un cycle d'entrelacement. Deux cycles d'entrelacement CY1, CY2 sont représentés sur la figure 7 à titre d'illustration.

Le dispositif d'asservissement 5 comporte également un bloc de correction 13 agencé pour déterminer une durée de correction Tc correspondant à la durée minimale de dépassement mesurée pendant un cycle d'entrelacement CY1, CY2. Le bloc de correction 13 est relié à la mémoire de stockage 12 afin de la consulter et en déduire, parmi les durées de dépassement T1, T2 de la mémoire 12, la durée minimale de dépassement mesurée pendant un cycle d'entrelacement GY1, CY2.

Le dispositif d'asservissement 5 comporte également un bloc d'optimisation 14 agencé pour calculer une durée d'anticipation Ta en fonction de la valeur de la durée de correction Tc fournie par le bloc de correction 13. Le bloc d'optimisation 14 est également agencé pour calculer une période de commutation optimisée Td' en soustrayant à la période de commutation déterminée Td la durée d'anticipation Ta, la période de commutation optimisée Td'étant ensuite appliquée à l'horloge 6 de manière à modifier les instants de commutation inférieure.

Autrement dit, le bloc d'optimisation 14 est relié à l'horloge 6 pour modifier la période de commutation Td de l'horloge 6 de manière à anticiper une commutation des interrupteurs des cellules de la durée d'anticipation Ta. L'horloge 6 possède alors une période de commutation optimisée Td' définie par la formule ci-dessous :

$$(1) \quad Td' = Td - Ta$$

Grâce à cette modification de la période de commutation Td de l'horloge 6, la commutation inférieure des cellules A1, A2 est modifiée tout en conservant un fonctionnement en ZVS. L'entrelacement des cellules A1, A2 peut ainsi être asservi de manière efficace et réactive.

Une mise en oeuvre du dispositif d'asservissement 5 selon l'invention va maintenant être présentée en référence aux figures 6A et 7.

En référence à la figure 7 représentant les intensités des courants de sortie Is$_1$, Is$_2$ du convertisseur de tension continue-continue abaisseur de tension de la figure 6A, la plage de commutation P est comprise entre un seuil de commutation inférieur -CMDC et un seuil de commande inférieur -M.

En référence à la figure 7, le bloc de dépassement 11 mesure respectivement pour les cellules de puissance A1, A2 une première durée de dépassement T1 et une deuxième durée de dépassement T2 pendant un premier cycle d'entrelacement CY1, les durées de dépassement T1, T2 étant stockées dans la mémoire 12 du dispositif d'asservissement 5.

En référence à la figure 7, la durée de dépassement T2 de la deuxième cellule A2 étant supérieure à la durée de dépassement T1 de la première cellule A1, le bloc de correction 13 en déduit une durée de correction Tc, égale à la durée de dépassement T1 de la première cellule A1, correspondant à la durée minimale de dépassement mesurée pendant le cycle d'entrelacement CY1.

Selon une premier mode de mise en oeuvre de l'invention, le bloc d'optimisation calcule une durée d'anticipation Ta égale à la durée de correction Tc. Une période de commutation optimisée Td' est calculée pour l'horloge 6 en utilisant la formule (1) présentée précédemment. L'horloge 6, de période de commutation optimisée Td', commande la commutation de chaque cellule de puissance A1, A2 de manière anticipée par rapport au cycle d'entrelacement précédent.

Pour le convertisseur, on définit une durée d'entrelacement Te qui correspond à la durée entre la commutation inférieure de la première cellule A1 et celle de la deuxième cellule A2. Pour conserver un entrelacement des cellules, la durée d'entrelacement Te doit être sensiblement égale à Td/n avec Td correspondant à la période de commutation de l'horloge 6 et n correspondant au nombre de cellules du convertisseur.

En référence à l'histogramme des durées de dépassement des cellules et à l'histogramme des instants des commutations inférieures des cellules de la figure 7, pour le premier cycle d'asservissement CY1, la durée d'entrelacement Te1 est faible par rapport à Td/2. Les cellules ne sont pas entrelacées. Après un cycle d'asservissement, la période de commutation est modifiée, comme indiqué précédemment, pour être égale à Td'. En référence à la figure 7, pour le deuxième cycle d'asservissement CY2, la durée d'entrelacement Te2 est égale au rapport Td'/2. Les cellules sont entrelacées et le courant de sortie global $I_{sg}$ du convertisseur est sensiblement continu.

Grâce à cette nouvelle période de commutation Td', l'entrelacement des courants de sortie $Is_1$, $Is_2$ des cellules A1, A2 est asservi. Comme la durée de correction Tc correspond à la durée de dépassement minimal dans la plage de commutation P, la commutation est toujours réalisée dans la plage de commutation P ce qui garantit peu de pertes en commutation en fonctionnement ZVS.

En référence à la figure 7 représentant un asservissement de la commutation sur deux cycles d'entrelacement CY1, CY2, la durée d'anticipation Ta est égale à la durée de correction Tc calculée au cycle précédent. Ainsi, pour la première cellule A1 dont le temps de dépassement T1 est minimal au premier cycle CY1, elle commutera au seuil de commutation -CMDC au deuxième cycle CY2. La deuxième cellule A2 commutera pour sa part sous le seuil de commutation -CMDC dans la plage de commutation P, sa durée de dépassement ayant été diminuée de la durée d'anticipation Ta.

Comme expliqué précédemment, du fait de la différence des valeurs des inductances L1, L2 des cellules A1, A2, les pentes des courants de sortie $Is_1$, $Is_2$ des cellules A1, A2 peuvent différer d'une cellule à une autre. Ainsi, au fil du temps, les durées de dépassement T1, T2 pour chacune des cellules varient de nouveau. Le procédé d'asservissement de l'entrelacement des cellules selon l'invention permet de garantir une synchronisation des cellules de manière cyclique tout en restant dans un fonctionnement ZVS limitant les pertes. La période de commutation Td des cellules est ainsi adaptée de manière dynamique, cycle à cycle.

De préférence, l'asservissement est réalisé de manière périodique, une période correspondant à un nombre de cycles prédéterminés. De manière préférée, l'asservissement est réalisé en continu, c'est-à-dire, à chaque cycle.

Selon une forme préférée du bloc d'optimisation 14, en référence à la figure 6B, le bloc d'optimisation 14 comporte un module de limitation 141 agencé pour comparer la durée de correction Tc calculée au cycle précédent à un seuil de correction Sc de valeur prédéterminée. Le seuil de correction Sc permet de réaliser un asservissement de proche en proche de l'entrelacement des cellules A1, A2 en limitant la valeur de la durée de correction Tc et, par voie de conséquence, en limitant la durée d'anticipation Ta qui est fonction de la durée de correction Tc.

Ainsi, si la durée de correction Tc est supérieure au seuil de correction Sc, le module de limitation 141 applique une durée d'anticipation Ta égale à la valeur du seuil de correction Sc. Sinon, le module de limitation 141 applique une durée d'anticipation Ta égale à la valeur de la durée de correction Tc. Autrement dit, le seuil de correction Sc permet de borner la valeur de la durée d'anticipation Ta pour permettre un asservissement gradué au cours des cycles d'entrelacement CY1, CY2.

Le bloc d'optimisation 14 comporte en outre un module de régulation 142 agencé pour réguler la valeur de la durée d'anticipation Ta. A titre d'exemple, le module régulation 142 met en oeuvre un procédé du type régulation proportionnelle intégrale. De plus, le module d'optimisation comporte un module de calcul 143 agencé pour soustraire, à la période de commutation Td, la durée d'anticipation Ta pour obtenir la période de commutation optimisée Td' qui est ensuite appliquée à l'horloge 6.

Il a été décrit un bloc d'optimisation 14 avec plusieurs modules qui sont indépendants les uns des autres. Ainsi, le bloc d'optimisation 14 peut comprendre un module de limitation 141 sans module de régulation 142, le bloc d'optimisation 14 pouvant comprendre toute combinaison de modules.

Une deuxième forme de réalisation du dispositif de l'invention est décrite en référence à la figure 8. Les références utilisées pour décrire les éléments de structure ou fonction identique, équivalente ou similaire à celles des éléments de la figure 6A sont les mêmes, pour simplifier la description. D'ailleurs, l'ensemble de la description de la forme de réalisation de la figure 6A n'est pas reprise, cette description s'appliquant aux éléments de la figure 8 lorsqu'il n'y a pas d'incompatibilités. Seules les différences notables, structurelles et fonctionnelles, sont décrites.

En référence à la figure 8, le dispositif d'asservissement 5 comporte en outre un module de pilotage 30 agencé pour commander les consignes des comparateurs 21, 22 de manière à piloter le convertisseur en tant qu'élévateur de tension ou abaisseur de tension. A cet effet, toujours en référence à la figure 8, le module de pilotage 30 comporte une première entrée de consigne de courant $I_{cons}$ et une deuxième entrée de commutation correspond au seuil de commutation Z qui sont toutes les deux reliées à un bloc de pilotage supérieur 31 et à un bloc de pilotage inférieur 32.

En référence à la figure 8, le bloc de pilotage supérieur 31 est agencé pour comparer les deux entrées du module de pilotage 30 et émettre, en sortie, sur le comparateur supérieur 21, l'entrée de valeur maximale.

Le bloc de pilotage inférieur 32 est agencé pour comparer les deux entrées du module de pilotage 30 et émettre, en sortie, sur le comparateur inférieur 22, la valeur minimale entre l'entrée de consigne de courant $I_{cons}$ et l'opposé de l'entrée de commutation Z.

Le deuxième mode de mise en oeuvre de l'invention va être maintenant décrit en référence à la figure 9. Dans cet exemple, l'entrée de consigne de courant $I_{cons}$ décroît de manière régulière depuis la valeur M à la valeur -M, l'entrée de commutation Z restant constante et égale à +CMDC, c'est-à-dire égale à la valeur du seuil de commutation supérieur.

En référence à la figure 9, à l'instant t0, le bloc de pilotage supérieur 31 compare l'entrée de consigne de courant $I_{cons}$, égale à +M, à l'entrée de commutation +CMDC. Comme la consigne de courant $L_{cons}$ est supérieure au seuil de commutation +CMDC, le comparateur supérieur 21 reçoit en entrée la consigne de courant +M, qui correspond au seuil de commande supérieur +M tel que présenté précédemment. De même, le bloc de pilotage inférieur 32 compare la consigne de courant $I_{cons}$, égale à +M, à l'opposé de l'entrée de commutation, égale à -CMDC. Comme la consigne de courant $I_{cons}$ est supérieure, le comparateur inférieur 22 reçoit en entrée la valeur -CMDC qui correspond au seuil de commutation inférieur, tel que présenté précédemment.

Ainsi, à l'instant t0, le dispositif d'asservissement 5 reçoit respectivement, en entrée de ses comparateurs 21, 22, le seuil de commande supérieur +M et le seuil de commutation inférieur -CMDC. Autrement dit, le premier mode de réalisation du dispositif précédemment présenté correspond au deuxième mode de réalisation à l'instant t0, dans lequel la consigne de courant est égale au seuil de commande supérieur +M.

Au fur et à mesure de la décroissance de la consigne de courant $I_{cons}$ entre t0 et t1, le dispositif d'asservissement 5 régule la période de commutation Td de l'horloge 6 de manière à conserver un asservissement des cellules A1, A2 en commutation ZVS.

A l'instant t1, le bloc de pilotage supérieur 31 compare la consigne de courant $I_{cons}$, égale à 0, à l'entrée de commutation Z, égale à +CMDC. Comme la consigne de courant $I_{cons}$ est inférieure à l'entrée de commutation Z, le comparateur supérieur 21 reçoit en entrée le seuil de commutation supérieur +CMDC.

De même, le bloc de pilotage inférieur 32 compare la consigne de courant, égale à 0, à l'opposé de l'entrée de commutation Z, égale à -CMDC. Comme la consigne de courant $I_{cons}$ est supérieure, le comparateur inférieur 32 reçoit en entrée le seuil de commutation inférieur -CMDC.

Ainsi, à l'instant t1, le dispositif reçoit respectivement, en entrée de ses comparateurs 21, 22, le seuil de commutation supérieur +CMDC et le seuil de commutation inférieur -CMDC. Toutes les commutations du convertisseur sont réalisées en fonctionnement ZVS ce qui garantit une limitation des pertes en commutation.

A l'instant t2, le bloc de pilotage supérieur 31 compare la consigne de courant $I_{cons}$, égale à -M, à l'entrée de commutation Z, égale à +CMDC. Comme la consigne de courant $I_{cones}$ est inférieure à l'entrée de commutation Z, le comparateur supérieur 21 reçoit en entrée le seuil de commutation supérieur +CMDC.

De même, le bloc de pilotage inférieur 32 compare la consigne de courant $I_{cons}$, égale à -M, à l'opposé de l'entrée de commutation Z, égale à - CMDC. Comme la consigne de courant $I_{cons}$ est inférieure, le comparateur inférieur 22 reçoit en entrée la consigne de courant -M.

Ainsi, à l'instant t2, le dispositif reçoit respectivement, en entrée de ses comparateurs 21, 22 le seuil de commutation supérieur +CMDC et la consigne de courant -M.

Au fur et à mesure de la décroissance de la consigne de courant $I_{cons}$ entre t1 et t2, le dispositif d'asservissement 5 régule la période de commutation Td de l'horloge 6 de manière à conserver un asservissement des cellules tout en conservant une commutation ZVS.

Le dispositif d'asservissement 5 permet d'adapter la période de commutation Td selon la consigne de courant $I_{cons}$. Le convertisseur peut ainsi avantageusement fonctionner en abaisseur ou en élévateur de tension.

L'invention a été ici décrite pour un convertisseur multicellulaire à deux cellules mais il va de soi qu'elle s'applique à un convertisseur comprenant plus de deux cellules afin de fournir un courant de sortie global quasi-constant. L'invention trouve une application particulièrement avantageuse dans le domaine de la recharge de batterie de véhicule, en particulier pour un véhicule dit électrique.

## Revendications

1. Procédé d'asservissement d'un convertisseur de tension continue-continue fonctionnant en commutation au zéro de tension (ZVS) avec un seuil de commutation (Z), le convertisseur comprenant :

   - une pluralité de cellules entrelacées, chaque cellule comprenant au moins deux interrupteurs commandés (K1, K2), agencés pour être alternativement fermés et ouverts, et une inductance (L) dans laquelle circule un courant de sortie (Is) de la cellule, et
   - le convertisseur comprenant en outre une horloge (6) de période de commutation déterminée (Td) agencée pour commander les interrupteurs (K1, K2) en commutation entre des seuils de commande supérieur (+M) et inférieur (-M), le seuil de commande (+M, -M) de valeur la plus proche du seuil de commutation (Z) étant désigné seuil de commande associé,

   procédé dans lequel :

   - on mesure, pour chaque cellule (A1, A2), une durée de dépassement (T1, T2) s'écoulant entre l'instant où l'intensité de courant de sortie (Is) de la cellule est égal au seuil de commande associé et l'instant où l'intensité de courant de sortie (Is) de la cellule est égal au seuil de commutation (Z) ; le procédé étant **caractérisé en ce que**
   - l'on détermine une durée de correction (Tc)

correspondant à la durée minimale de dépassement mesurée pour la pluralité de cellules pendant un cycle d'entrelacement (C1, CY2), un cycle d'entrelacement correspondant à la durée pendant laquelle une durée de dépassement (T1, T2) est mesurée pour la pluralité de cellules (A1, A2) ;

- l'on calcule une période de commutation optimisée (Td') de l'horloge (6) en soustrayant à la période de commutation déterminée (Td) une durée d'anticipation (Ta) qui est fonction de la durée de correction (Tc) ; et

- l'on applique la période de commutation optimisée (Td') à l'horloge (6) de manière à asservir l'entrelacement des courants de sortie des cellules du convertisseur.

**2.** Procédé selon la revendication 1, dans lequel la durée d'anticipation (Ta) est égale à la durée de correction (Tc).

**3.** Procédé selon la revendication 1, dans lequel un seuil de correction (Sc) étant prédéterminé, la durée d'anticipation (Ta) est égale à la durée de correction (Tc) si la durée de correction (Tc) est inférieure au seuil de correction (Sc).

**4.** Procédé selon la revendication 3, dans lequel la durée d'anticipation (Ta) est égale au seuil de correction (Sc) si la durée de correction (Tc) est supérieure au seuil de correction (Sc).

**5.** Procédé selon l'une des revendications 1 à 4, dans lequel on applique une période de commutation optimisée (Td') à l'horloge (6), après un nombre de cycles d'entrelacement prédéterminé.

**6.** Procédé la revendication 5, dans lequel on applique une période de commutation optimisée (Td') à l'horloge (6) à chaque cycle d'entrelacement.

**7.** Dispositif d'asservissement (5), pour la mise en oeuvre du procédé selon l'une des revendications 1 à 6, d'un convertisseur de tension continue-continue comprenant une pluralité de cellules entrelacées, chaque cellule comprenant au moins deux interrupteurs commandés (K1, K2), agencés pour être alternativement fermés et ouverts, et une inductance (L) dans laquelle circule un courant de sortie (Is) de la cellule, le convertisseur comprenant en outre une horloge (6) de période de commutation déterminée (Td) agencée pour commander les interrupteurs (K1, K2) en commutation entre des seuils de commande supérieur (+M) et inférieur (-M), le seuil de commande (+M, - M), de valeur la plus proche du seuil de commutation (Z), étant désigné seuil de commande associé, dispositif comprenant :

- au moins un bloc de dépassement (11) agencé pour mesurer, pour chaque cellule (A1, A2), une durée de dépassement (T1, T2) s'écoulant entre l'instant où l'intensité de courant de sortie (Is) de la cellule est égal au seuil associé et l'instant où l'intensité de courant de sortie (Is) de la cellule est égal au seuil de commutation (Z) ;

- une mémoire de stockage (12) pour enregistrer les durées de dépassement (11) mesurées par le bloc de dépassement (11) ; le dispositif étant **caractérisé en ce qu'**il comprend

- un bloc de correction (13) agencé pour déterminer dans la mémoire de stockage (12) une durée de correction (Tc) correspondant à la durée minimale de dépassement mesurée pour la pluralité de cellules pendant un cycle d'entrelacement (CY1, CY2), un cycle d'entrelacement correspondant à la durée pendant laquelle une durée de dépassement (T1, T2) est mesurée pour la pluralité de cellules (A l, A2) ; et

- un bloc d'optimisation (14) agencé pour calculer une période de commutation optimisée (Td') de l'horloge (6) en soustrayant à la période de commutation déterminée (Td) une durée d'anticipation (Ta) qui est fonction de la durée de correction (Tc) et pour appliquer la période de commutation optimisée (Td') à l'horloge (6) de manière à asservir l'entrelacement des courants de sortie des cellules du convertisseur.

**8.** Convertisseur de tension continue-continue comprenant un dispositif d'asservissement (5) selon la revendication 7.

**9.** Programme d'ordinateur comprenant des portions de code de programme pour l'exécution des étapes du procédé selon l'une quelconque des revendications 1 à 6, lorsque ledit programme est exécuté sur un ordinateur.

**10.** Support d'enregistrement dans lequel est stocké le programme selon la revendication 9.

**Claims**

**1.** Method for controlling a DC-DC voltage converter operating in zero voltage switching (ZVS) with a switching threshold (Z), the converter comprising:

- a plurality of interleaved cells, each cell comprising at least two controlled switches (K1, K2), arranged so as to be alternately closed and opened, and an inductor (L) in which an output current (Is) of the cell flows, and

- the converter also comprising a clock (6) with a determined switching period (Td) arranged to control the switches (K1, K2) in switching between an upper control threshold (+M) and a lower control threshold (-M), the control threshold (+M, -M) with the value closest to the switching threshold (Z) being designated the associated control threshold,

in which Method:

- for each cell (A1, A2), an overshoot time (T1, T2) flowing between the moment at which the intensity of output current (Is) of the cell is equal to the associated control threshold and the moment at which the intensity of output current (Is) of the cell is equal to the switching threshold (Z) is measured; the method being **characterized in that**
- a correction time (Tc) corresponding to the measured minimum overshoot time is determined for the plurality of cells during an interleaving cycle (CY1, CY2), an interleaving cycle corresponding to the time during which an overshoot time (T1, T2) is measured for the plurality of cells (A1, A2);
- an optimized switching period (Td') of the clock (6) is computed by subtracting from the determined switching period (Td) an anticipation time (Ta) which is a function of the correction time (Tc); and
- the optimized switching period (Td') is applied to the clock (6) so as to control the interleaving of the output currents of the cells of the converter.

2. Method according to Claim 1, in which the anticipation time (Ta) is equal to the correction time (Tc).

3. Method according to Claim 1, in which, a correction threshold (Sc) being predetermined, the anticipation time (Ta) is equal to the correction time (Tc) if the correction time (Tc) is below the correction (Sc) threshold.

4. Method according to Claim 3, in which the anticipation time (Ta) is equal to the correction threshold (Sc) if the correction time (Tc) is above the correction threshold (Sc).

5. Method according to one of Claims 1 to 4, in which an optimized switching period (Td') is applied to the clock (6), after a predetermined number of interleaving cycles.

6. Method according to Claim 5, in which an optimized switching period (Td') is applied to the clock (6) at each interleaving cycle.

7. Control device (5) for the implementation of the method according to one of Claims 1 to 6, for controlling a DC-DC voltage converter comprising a plurality of interleaved cells, each cell comprising at least two controlled switches (K1, K2) arranged to be alternatively closed and opened, and an inductor (L) in which an output current (Is) of the cell flows, the convertor also comprising a clock (6) with a determined switching period (Td) arranged to control the switches (K1, K2) in switching between an upper control threshold (+M) and a lower control threshold (-M), the control threshold (+M, -M) with a value closest to the switching threshold (Z) being designated the associated control threshold, the device comprising:

- at least one overshoot unit (11) arranged to measure, for each cell (A1, A2), an overshoot time (T1, T2) flowing between the moment at which the intensity of output current (Is) of the cell is equal to the associated threshold and the moment at which the intensity of output current (Is) of the cell is equal to the switching threshold (Z);
- a storage memory (12) for recording the overshoot times which are measured by the overshoot unit (11); the device being **characterized in that** it comprises
- a correction unit (13) arranged to determine in the storage memory (12) a correction time (Tc) corresponding to the minimum overshoot time measured for the plurality of cells during an interleaving cycle (CY1, CY2), an interleaving cycle corresponding to the time during which an overshoot time (T1, T2) is measured for the plurality of cells (A1, A2); and
- an optimization unit (14) arranged to compute an optimized switching period (Td') of the clock (6) by subtracting from the determined switching period (Td) an anticipation time (Ta) which is a function of the correction time (Tc) and to apply the optimized switching period (Td') to the clock (6) so as to control the interleaving of the output currents of the cells of the converter.

8. DC-DC voltage converter comprising a control device (5) according to Claim 7.

9. Computer program comprising portions of program code for the execution of the steps of the method according to any one of Claims 1 to 6, when the said program is executed on a computer.

10. Recording medium in which the program according to Claim 9 is stored.

**Patentansprüche**

1. Verfahren zur Regelung eines DC-DC-Spannungswandlers, der nullspannungsschaltend (ZVS) mit einer Schaltschwelle (Z) arbeitet, wobei der Wandler enthält:

     - eine Vielzahl von verschachtelten Zellen, wobei jede Zelle mindestens zwei gesteuerte Schalter (K1, K2), die eingerichtet sind, um abwechselnd geschlossen und offen zu sein, und eine Drosselspule (L) enthält, in der ein Ausgangsstrom (Is) der Zelle fließt, und
     - der Wandler außerdem einen Taktgeber (6) einer bestimmten Schaltperiode (Td) enthält, der eingerichtet ist, um die Schalter (K1, K2) zwischen einer oberen Steuerschwelle (+M) und einer unteren Steuerschwelle (-M) umzuschalten, wobei die Steuerschwelle (+M, -M) des der Schaltschwelle (Z) am nächsten liegenden Werts als zugeordnete Steuerschwelle bezeichnet wird, Verfahren, bei dem:
     - für jede Zelle (A1, A2) eine Überschreitungsdauer (T1, T2) gemessen wird, die zwischen dem Zeitpunkt, in dem die Ausgangsstromstärke (Is) der Zelle gleich der zugeordneten Steuerschwelle ist, und dem Zeitpunkt abläuft, in dem die Ausgangsstromstärke (Is) der Zelle gleich der Schaltschwelle (Z) ist; wobei das Verfahren **dadurch gekennzeichnet ist, dass**
     - eine Korrekturdauer (Tc) entsprechend der für die Vielzahl von Zellen während eines Verschachtelungszyklus (CY1, CY2) gemessenen Mindestüberschreitungsdauer bestimmt wird, wobei ein Verschachtelungszyklus der Dauer entspricht, während der eine Überschreitungsdauer (T1, T2) für die Vielzahl von Zellen (A1, A2) gemessen wird;
     - eine optimierte Schaltperiode (Td') des Taktgebers (6) berechnet wird, indem von der bestimmten Schaltperiode (Td) eine Antizipationsdauer (Ta) subtrahiert wird, die von der Korrekturdauer (Tc) abhängt; und
     - die optimierte Schaltperiode (Td') an den Taktgeber (6) angewendet wird, um die Verschachtelung der Ausgangströme der Zellen des Wandlers zu regeln.

2.   Verfahren nach Anspruch 1, wobei die Antizipationsdauer (Ta) gleich der Korrekturdauer (Tc) ist.

3.   Verfahren nach Anspruch 1, wobei, wenn eine Korrekturschwelle (Sc) vorherbestimmt ist, die Antizipationsdauer (Ta) gleich der Korrekturdauer (Tc) ist, wenn die Korrekturdauer (Tc) unter der Korrekturschwelle (Sc) liegt.

4.   Verfahren nach Anspruch 3, wobei die Antizipationsdauer (Ta) gleich der Korrekturschwelle (Sc) ist, wenn die Korrekturdauer (Tc) über der Korrekturschwelle (Sc) liegt.

5.   Verfahren nach einem der Ansprüche 1 bis 4, wobei eine optimierte Schaltperiode (Td') nach einer vorherbestimmten Anzahl von Verschachtelungszyklen an den Taktgeber (6) angewendet wird.

6.   Verfahren nach Anspruch 5, wobei eine optimierte Schaltperiode (Td') bei jedem Verschachtelungszyklus an den Taktgeber (6) angewendet wird.

7.   Regelungsvorrichtung (5), zur Durchführung des Verfahrens nach einem der Ansprüche 1 bis 6, eines DC-DC-Spannungswandlers, der eine Vielzahl von verschachtelten Zellen enthält, wobei jede Zelle mindestens zwei gesteuerte Schalter (K1, K2), die eingerichtet sind, um abwechselnd geschlossen und offen zu sein, und eine Drosselspule (L) enthält, in der ein Ausgangsstrom (Is) der Zelle fließt, wobei der Wandler außerdem einen Taktgeber (6) einer bestimmten Schaltperiode (Td) enthält, der eingerichtet ist, um die Schalter (K1, K2) zwischen einer oberen Steuerschwelle (+M) und einer unteren Steuerschwelle (-M) umzuschalten, wobei die Steuerschwelle (+M, -M) des der Schaltschwelle (Z) am nächsten liegenden Werts als zugeordnete Steuerschwelle bezeichnet wird, wobei die Vorrichtung enthält:

     - mindestens einen Überschreitungsblock (11), der eingerichtet ist, um für jede Zelle (A1, A2) eine Überschreitungsdauer (T1, T2) zu messen, die zwischen dem Zeitpunkt, in dem die Ausgangsstromstärke (Is) der Zelle gleich der zugeordneten Steuerschwelle ist, und dem Zeitpunkt abläuft, in dem die Ausgangsstromstärke (Is) der Zelle gleich der Schaltschwelle (Z) ist;
     - einen Speicher (12), um die durch den Überschreitungsblock (11) gemessenen Überschreitungsdauern zu speichern;

wobei die Vorrichtung **dadurch gekennzeichnet ist, dass** sie enthält

     - einen Korrekturblock (13), der eingerichtet ist, um im Speicher (12) eine Korrekturdauer (Tc) zu bestimmen, die der Mindestüberschreitungsdauer entspricht, die für die Vielzahl von Zellen während eines Verschachtelungszyklus (CY1, CY2) gemessen wird, wobei ein Verschachtelungszyklus der Dauer entspricht, während der eine Überschreitungsdauer (T1, T2) für die Vielzahl von Zellen (A1, A2) gemessen wird; und
     - einen Optimierungsblock (14), der eingerichtet ist, um eine optimierte Schaltperiode (Td') des Taktgebers (6) zu berechnen, indem von der bestimmten Schaltperiode (Td) eine Antizipationsdauer (Ta) subtrahiert wird, die von der Korrekturdauer (Tc) abhängt, und um die optimierte Schaltperiode (Td') an den Taktgeber (6) anzuwenden, um die Verschachtelung der Ausgangsströme der Zellen des Wandlers zu regeln.

8. DC-DC-Spannungswandler, der eine Regelungsvorrichtung (5) nach Anspruch 7 enthält.

9. Computerprogramm, das Programmcodeteile für die Ausführung der Schritte des Verfahrens nach einem der Ansprüche 1 bis 6 enthält, wenn das Programm in einem Computer ausgeführt wird.

10. Aufzeichnungsträger, in dem das Programm nach Anspruch 9 gespeichert ist.

Fig.1

Fig.2

Fig.3

Fig.4

Fig.5

Fig.6A

# Fig.6B

# Fig.7

## Fig.8

## Fig.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6628106 B